# EUROPÄISCHE PATENTSCHRIFT

(11) **EP 0 457 168 B1**
(45) Veröffentlichungstag und Bekanntmachung des Hinweises auf die Patenterteilung: **26.02.1997**
(21) Anmeldenummer: 91107442.5
(22) Anmeldetag: 08.05.1991
(51) Int. Cl.: G11B 9/00

(54) **Verfahren zur zeitlich stabilen Markierung einzelner Atome oder Atomgruppen einer Festkörperoberfläche sowie Verwendung dieses Verfahrens zur Speicherung von Informationseinheiten im atomaren Bereich**
Method for the temporary stable marking of individual atoms or atom groups as well as utilisation of this method for storing information units in the atomic domain
Procédé pour le marquage d'atomes individuels ou de groupes d'atomes de façon temporellement stable ainsi que l'utilisation de ce procédé pour le stockage d'unités d'information dans le domaine atomique

(30) Priorität: 16.05.1990 DE 4015656
(43) Veröffentlichungstag der Anmeldung: 21.11.1991
(73) Patentinhaber: BASF Aktiengesellschaft, 67063 Ludwigshafen (DE)
(72) Erfinder: Fuchs, Harald, Dr., W-6719 Carlsberg (DE); Schimmel, Thomas Dr., W-8670 Hof (DE)

(56) Entgegenhaltungen:
- EP-A- 0 272 935
- EP-A- 0 307 210
- EP-A- 0 436 175
- DE-A- 3 607 932
- US-A- 3 833 894

## Beschreibung

Die Erfindung betrifft ein Verfahren zur zeitlich stabilen Markierung einzelner Atome oder Atomgruppen einer Festkörperoberfläche durch eine veränderte strukturelle oder elektronische Konfiguration sowie die Verwendung dieses Verfahrens zur Informationsspeicherung.

Die Speicherung von Informationen, insbesondere von Bild- und Datensignalen, erfolgt derzeit vorwiegend mit Hilfe magnetischer und optischer Aufzeichnungsträger. Die erzielbare Informationsdichte bei derartigen Aufzeichnungsträgern wird bestimmt durch die verfahrensbedingt kleinsten erzeugbaren und wieder auslesbaren Informationseinheiten. Diese sind bei den derzeit üblichen Magnetspeichern bestimmt durch die Größe der magnetischen Domänen (Weiß'sche Bezirke), in mechanischer Hinsicht durch den Kopfspalt der verwendeten Schreib/Leseköpfe sowie durch den Abstand der Schreib/Leseeinheit vom eigentlichen Informationsträger. Bei Informationsträgern, bei denen die eingespeicherte Information durch Änderung der optischen Eigenschaften erzeugt wird, liegt die Begrenzung in der verwendeten Lichtwellenlänge. Hier können somit die kleinsten Informationseinheiten nicht kleiner sein als etwa die halbe Lichtwellenlänge. Eine Steigerung der Speicherdichte bei derartigen optischen Aufzeichnungsträgern ist inzwischen auch durch die sogenannte optische Nahfeldmikroskopie erreichbar, wobei sich die optische Ausleseeinheit nur wenige Nanometer über der informationstragenden Oberfläche befindet. Erreicht werden hierbei Informationsdichten die sich bestenfalls in der Größenordnung von etwa 20 nm befinden.

Eine weitere Steigerung der Informationsdichte ist nur möglich durch die Anwendung von Nahfeldtechniken mit einer Auflösung im Subnanometerbereich. Hierzu eignen sich die sogenannten Raster-Sonden-Techniken zu denen das Raster-Tunnel-Mikroskop bzw. das Kraft-Mikroskop gehören. Diese Methoden erlauben Abbildungen von Oberflächen auf atomarer Skala. Es wurde daher schon vorgeschlagen, Informationsspeicher mit der höchstmöglichen Dichte, nämlich im Bereich der einzelnen Atome bzw. Moleküle, zu erzeugen. Die Realisierung dieser Speicher würde zu Informationsdichten führen, welche im Terabyte-Bereich pro cm² liegen.

Zur Speicherung von Informationen im Nanometerbereich auf anorganischen oder organischen Oberflächen gibt es bereits eine Reihe von Vorschlägen, so u.a. M.A. McCord et al., J.Vac.Sci,Technol. B4, 86-88 (1986), R.M. Silver er al., Appl.Phys.Lett. 51, 247-249 (1987), U. Staufer et al., J.Vac.Sci. Technol A6, 537-539 (1988). Auch über die Abscheidung einzelner Atome wurde schon berichtet (R.S. Becker et al., Nature 325, 421-451 (1987).

Alle bisher bekanntgewordenen Vorschläge, höchstauflösende Informationsspeicher, welche insbesondere auch über lange Zeit stabil sind, bereitzustellen, konnten jedoch nicht befriedigen. Wahrend es bei den organischen Speichern noch nicht gelungen ist, Linienbreiten von <10 nm zu erzeugen, war es bei anorganischen Systemen, welche Strukturen von bis herab zu 3 nm ergaben, nicht möglich, diese auch über längere Zeit, d.h. über Minuten bis zu Stunden, stabil zu halten. Bei den bis-jetzt bekannt gewordenen zeitlich stabilen Strukturen in Silicium (App.Phys.Lett. Van Loenen et al., (1989) 55, 1312-1314) wird dagegen die atomare Struktur zerstört, d.h. die atomare Ordnung geht verloren. Ein solches Verfahren eignet sich daher nur zur Erzeugung nichtlöschbarer Speicher.

In EP-0272935-B1 wird eine Vorrichtung zum Aufzeichnen und Wiedergeben von Information beschrieben, die eine Sondenelektrode, ein Aufzeichnungsmedium und eine Einrichtung zum Anlegen einer Schreibspannung bzw. Lesespannung zwischen diesen aufweist, wobei das Aufzeichnungsmedium einen Übergang von einem ersten zu einem zweiten Zustand eingehen kann, der ein ausgeprägte und verschiedene spezifische elektrische Leitfähigkeit von der des ersten Zustandes aufweist und wobei die Informationsaufzeichnung in einer dünnen Schicht, die auf eine Elektrode aufgebracht wurde, erfolgt.

In EP-0307210-A2 wird ein Tunnelmikroskop-artiges Gerät zur Datenspeicherung beschrieben, mit dem in dielektrischen Materialien Atome polarisiert werden können.

Die ältere Anmeldung EP-A-0436175-A2 bezieht sich auf ein Verfahren zur zeitlich stabilen Speicherung von Informationseinheiten im Nanometerbereich, bei dem die Oberfläche eines halbleitenden Schichtmaterials mittels einer oberflächensensitiven Rastersonde ohne Veränderung der atomaren Ordnung plastisch verformt wird.

Aufgabe der vorliegenden Erfindung war es, ein Verfahren zur zeitlich stabilen Markierung von Atomen oder Atomgruppen bereitzustellen, mit dem insbesondere eine zeitlich stabile Speicherung von Informationen möglich ist, ohne die Zerstörung des lokalen atomaren Gitters.

Es wurde nun gefunden, daß sich die Aufgabe mit einem Verfahren zur zeitlich stabilen Markierung von Atomen oder Atomgruppen einer Festkörperoberfläche gemäß Anspruch 1 lösen läßt.

Gegenstand der vorliegenden Erfindung ist daher ein Verfahren zur zeitlich stabilen Markierung einzelner Atome oder Atomgruppen einer Festkörperoberfläche, bei dem eine vorbestimmte Anzahl einzelner Atome oder Atomgruppen im atomaren Gitter der Festkörperoberfläche ohne wesentliche Veränderung der atomaren Gitterstruktur parallel zur Festkörperoberfläche und ohne Beteiligung von Fremdatomen in eine gegenüber dem Ausgangszustand veränderte strukturelle oder elektronische Konfiguration gebracht werden, wobei die lokale geometrische oder elektronische Konfigurationsänderung einzelner Atome, bei der die atomare Koordinierung der umgebenden Atome nicht wesentlich gestört wird, durch ein zeitlich und räumlich begrenztes äußeres elektrisches Feld bewirkt wird, und das zeitlich und räumlich begrenzte elektrische Feld durch das Anlegen eines spannnungspulses von ca. 1,5 Volt an die Spitze einer oberflächensensitiven Rastersonde erzeugt wird.

Die strukturelle oder elektronische Konfigurationsänderung läßt sich besonders vorteilhaft in der Festkörperoberfläche eines halbleitenden Materials mit Schichtgitterstuktur durch kurzzeitiges Anlegen eines zeitlich und räumlich begrenzten äußeren elektrischen Feldes bewirken.

Bei dem erfindungsgemäßen Verfahren läßt sich die Änderung der Konfiguration besonders vorteilhaft gestalten, wenn die lokale geometrische oder elektronische Rekonfiguration durch Erzeugen metastabiler angeregter Zustände in einem Doppel- oder Mehrfachmuldenpotential zustande kommt.

Das erfindungsgemäße Verfahren der zeitliich stabilen Markierung von einzelnen Atomen oder Atomgruppen läßt sich in besonders vorteilhafter weise für die Speicherung von Informationseinheiten heranziehen. Damit wird ein Weg aufgezeigt, die Speicherung von Informationen im atomaren Bereich vorzunehmen und somit die entsprechend hohe Informationsdichte zu erreichen. Das erfindungsgemäße Verfahren läßt sich aber nicht nur für die Informationsspeicherung verwenden, es gestattet darüber hinaus auch ein Löschen der gespeicherten Informationen. So läßt sich die gemäß dem erfindungsgemäßen Verfahren vorgenommene Speicherung von Informationseinheiten mit der Zufuhr von Energie durch Relaxation wieder aufheben. Dadurch wird der ursprüngliche Zustand wieder hergestellt und somit die Information gelöscht. Geeignet ist hierfür insbesondere die Zufuhr von thermischer Energie durch flächiges Aufheizen oder auch durch flächige oder punktuelle Laserbehandlung.

Bei der Durchführung des erfindungsgemäßen Verfahrens wird von einer Festkörperoberfläche, insbesondere einer halbleitenden Schicht ausgegangen, welche üblicherweise aus Chalkogeniden, z.B. aus WSe₂ besteht. In der Oberfläche einer solchen Schicht wird nun mit Hilfe der Nahfeldtechnik, z.B. mittels einer nadelförmigen Elektrode einer oberflächensensitiven Rastersonde, etwa eines Raster-Tunnelmikroskops oder eines Rasterkraftmikroskops, durch Anlegen eines kurzzeitigen elektrischen oder magnetischen Feldes die atomare Markierung vorgenommen. Da der Ort des maximalen elektrischen Feldes einer solchen Rastersonde auf der Oberfläche des halbleitenden Schichtmaterials, vorzugsweise zwischen 10 nm und 0,1 nm beträgt, lassen sich damit die Atome oder Atomgruppen beeinflussen. Diese lokal eingebrachte Energie bewirkt, daß die betroffenen Atome oder Atomgruppen über das mittlere Niveau der sie umgebenden Atome in eine zeitlich stabile Konfiguration angehoben werden. Wesentlich ist dabei, daß die atomare Koordinierung der umgebenden Atome dabei nicht gestört wird und sich die Maßnahme unter normalen Umgebungsbedingungen, d.h. beispielsweise an Luft und bei Raumtemperatur, durchführen läßt.

Für den Fall, daß die gespeicherte Information wieder gelöscht werden soll, läßt sich dies durch thermisches Behandeln der Schichtoberfläche, wie es u.a. durch einen IR-Laserbeschuß möglich ist, erreichen. Damit werden die über das mittlere Niveau der sie umgebenden Atome angehobenen Atome oder Atomgruppen wieder in die zuvor eingenommene Struktur eingeordnet.

Für die zum Einschreiben der Informationen verwendete Nahfeldtechnik lassen sich die bekannten Verfahren der Raster-Tunnel-Mikroskopie bzw. der Kraft-Mikroskopie einsetzen. Die Anordnung dieser Nahfeldtechniken ist zur Charakterisierung von Oberflächen bekannt und auch beschrieben (Y. Kuk et al., Rev.Sci.Instrum. 60(2), 165-180 (1989)).

Das erfindungsgemäße Verfahren sei im folgenden beispielhaft erläutert:

Die Oberfläche einer Wolframdiselenid-Probe wurde mit einem Rastertunnelmikroskop (STM) zunächst mit atomarer Auflösung abgebildet. Danach wurden während des Rasterscans der Tunnelspitze über die Probe mittels eines Pulsgenerators in Überlagerung zur Tunnelspannung Spannungspulse mit einer Amplitude von 0,8 bis 10 Volt zwischen Tunnelspitze und Probe angelegt. Anschließendes Abscannen der Probe liefert Strukturen auf der Oberfläche, deren Ausdehnung mit der Höhe der Spannungspulse zunimmt.

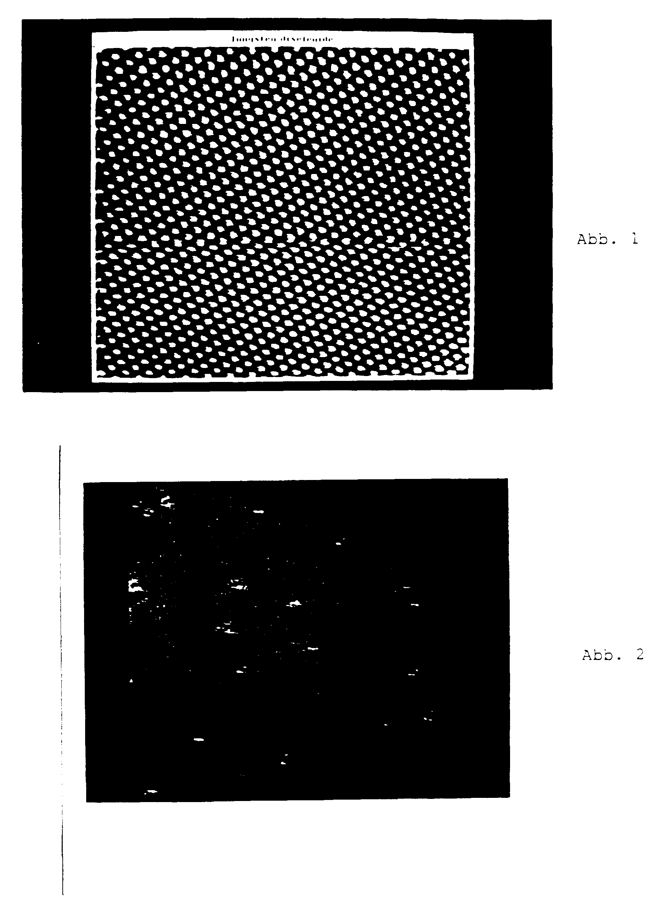

Das Schalten von einzelnen Atomen bzw. von Atomgruppen ist in Abb. 2 verdeutlicht; Abb. 1 (Bildgröße etwa 100 x 100 Å) zeigt das mittels STM aufgenommene Bild einer gewachsenen Wolframdiselenid-Oberfläche, Abb. 2 (Bildgröße etwa 300 x 300 Å) das Bild einer solchen Oberfläche unmittelbar nach Anlegen von Spannungspulsen von ca. 1,5 Volt. Dreiergruppen von Atomen wurden hier gezielt verändert, wobei die relative Lage exakt den Positionen der Tunnelspitze zum Zeitpunkt des Pulses entspricht. Es ließen sich auf diese Weise Muster auf die Probe schreiben; jeder Spannungspuls markiert in definierter Position Atome, die in ihrer räumlichen bzw. elektronischen Konfiguration verändert sind.

Dabei war es problemlos möglich, mehr als 100 Strukturen mit der gleichen Spitze zu schreiben und anschließend atomar aufgelöst abzubilden. Veränderungen an der Abbildungsqualität der Probenspitze als Folge des Pulsens traten dabei normalerweise nicht auf.

Sowohl der Schreib- als auch der Ausleseprozeß können unter normalen Bedingungen, d.h. insbesondere ohne Verwendung von Inertgas, Vakuum oder tiefen Temperaturen durchgeführt werden.

Daneben konnte mit weiteren Experimenten auch gezeigt werden, daß die Anwendung von Hoch- oder Ultrahochvakuum keinen beobachtbaren Einfluß auf den Schreib- oder Lesevorgang hat.

Um die Zeitstabilität der erzeugten Markierungen zu überprüfen, wurden gezielt bestimmte Anordnungen markierter Punkte, etwa im Dreieck, im Quadrat oder als Parallelogramm, geschrieben und die resultierenden Strukturen abgebildet und in ihrer relativen Lage zueinander protokolliert; die Strukturen konnten in unveränderter Form und gleicher Anordnung nach zwei Tagen wieder aufgefunden werden. Inbesondere konnte auch gezeigt werden, daß ihre Stabilität nicht nur im Vakuum oder unter Inertgas, sondern auch an Luft gegeben ist.

Für Anwendungen als Informationsspeicher ist es wesentlich, daß der Auslesevorgang die gespeicherten Informationen nicht verändert. Dazu wurden Sowohl größere als auch kleinere Strukturen (Abb. 2) auf verschiedenen Wolframdiselenid-Proben über mehrere Stunden mit dem STM abgescannt und dabei bis zu 500 mal abgebildet. In keinem Fall konnte eine Veränderung durch den Abbildungsprozess (= Ausleseprozess bei der Anwendung als Datenträger) beobachtet werden.

Das Löschen von Strukturen auf Wolframdiselenid-Oberflächen erfolgte am einfachsten durch Erhitzen der Probenoberfläche für ca. 40 Minuten auf ca. 600°C. Auf der ganzen Oberfläche mit Strukturierungen bedeckte, aber nach wie vor atomar geordnete Oberflächen werden durch diesen Vorgang wieder atomar flach und strukturlos.

Für die Anwendung als Informationsspeicher wurden somit die Funktionen Lesen, Schreiben und Löschen demonstriert und die zu ihrer Realisieriung verwendeten Verfahren angegeben; für die in Abb. 2 erzeugten Strukturen ergibt sich eine Datendichte von ca. 10 Terabyte/cm², was um einige Zehnerpotenzen die Speicherdichte von magnetischen Harddisks bzw. magnetooptischen Platten übersteigt.

## Patentansprüche

1. Verfahren zur zeitlich stabilen Markierung einzelner Atome oder Atomgruppen einer Festkörperoberfläche, bei dem eine vorbestimmte Anzahl einzelner Atome oder Atomgruppen im atomaren Gitter der Festkörperoberfläche, ohne wesentliche Veränderung der atomaren Gitterstruktur parallel zur Festkörperoberfläche und ohne Beteiligung von Fremdatomen in eine gegenüber dem Ausgangszustande veränderte strukturelle oder elektronische Konfiguration gebracht werden, wobei die lokale geometrische oder elektronische Konfigurationsänderung einzelner Atome, bei der die atomare Koordinierung der umgebenden Atome nicht wesentlich gestört wird, durch ein zeitlich und räumlich begrenztes äußeres elektrisches Feld bewirkt wird und das zeitlich und räumlich begrenzte elektrische Feld durch das Anlegen eines Spannungspulses von ca. 1,5 Volt an die Spitze einer oberflächensensitiven Rastersonde erzeugt wird.

2. Verfahren gemäß Anspruch 1, dadurch gekennzeichnet, daß als Festkörperoberfläche ein halbleitendes Material mit Schichtgitterstruktur eingesetzt wird.

3. Verwendung des Verfahrens zur zeitlich stabilen Markierung einzelner Atome oder Atomgruppen gemäß Anspruch 1 oder 2 zur Speicherung von Informationseinheiten im atomaren Bereich.

## Claims

1. A process for the time-stable labeling of individual atoms or groups of atoms in the surface of a solid, in which a predetermined number of individual atoms or groups of atoms in the atomic lattice of the surface are converted into a structural or electronic configuration which is modified relative to the initial state, without significantly modifying the atomic lattice structure parallel to the surface and without the participation of foreign atoms, the local geometric or electronic change in configuration of individual atoms, in which the atomic coordination of the surrounding atoms is not significantly disturbed, being achieved by means of an external electrical field applied for a limited time and over a limited area and said electrical field being produced by applying approximately 1.5 volt pulses to the tip of a surface-sensitive scanning probe.

2. A process as claimed in claim 1, wherein the surface employed is a semiconducting material with a layered lattice structure.

3. The use of a process for the time-stable labeling of individual atoms or groups of atoms as claimed in claim 1 or 2 for storing information units in the atomic range.

## Revendications

1. Procédé de marquage temporellement stable d'atomes individuels ou de groupes d'atomes d'une surface d'un solide, dans lequel un nombre prédéterminé d'atomes individuels ou de groupes d'atomes dans le réseau atomique de la surface du corps monolithique est placé, sans modification sensible de la structure réticulaire atomique, parallèlement par rapport à la surface du corps monolithique et sans participation d'atomes étrangers, dans une configuration structurelle ou électronique modifiée par rapport à l'état initial, la modification locale géométrique ou électronique de la configuration d'atomes individuels, pour laquelle la coordination atomique des atomes environnants n'est pas notablement perturbée, étant provoquée par un champ électrique extérieur limité temporellement et spatialement, et le champ électrique limité temporellement et spatialement étant produit par application d'une impulsion de tension d'environ 1,5 volt, sur la pointe d'une sonde à balayage sensible en surface.

2. Procédé selon la revendication 1, caractérisé par le fait qu'on utilise, comme surface de corps monolithique, un matériau semi-conducteur ayant une structure réticulaire à couches.

3. Utilisation du procédé pour le marquage temporellement stable d'atomes individuels ou de groupes d'atomes selon la revendication 1 ou 2, pour le stockage d'unités d'information dans la plage atomique.
